# EUROPEAN PATENT APPLICATION

(11) **EP 4 830 880 A1**
(43) Date of publication of application: **28.10.2026**
(21) Application number: 25305585.9
(22) Date of filing: 24.04.2025
(51) Int. Cl.: B25J 9/16

(54) **COMPUTER-IMPLEMENTED METHOD OF CONTROLLING A ROBOT**

(71) Applicant: TOYOTA JIDOSHA KABUSHIKI KAISHA, Toyota-shi, Aichi-ken 471-8571 (JP)
(72) Inventor: DESPINOY, Fabien, 1140 BRUSSELS (BE); CASSINELLI, Matteo, 1140 BRUSSELS (BE); HONERKAMP, Daniel, 79110 FREIBURG i. Br. (DE); BUECHNER, Martin Alexander, 79110 FREIBURG i. Br. (DE); WELSCHEHOLD, Tim, 79110 FREIBURG i. Br. (DE); VALADA, Abhinav, 79110 FREIBURG i. Br. (DE); MOHAMMADI, Mohammad, TORONTO, M5S 3H5 (CA); GILITSCHENSKI, Igor, TORONTO, M5S 3H5 (CA)
(74) Representative: Cabinet Beau de Loménie

(57) **Abstract**

This method controls a robot to perform a kinematic task in response to a request expressed in natural language, the performance of the task requiring the robot to explore a real environment comprising objects represented by a graph. It comprises:
- providing (F10) a large language model (LLM2) with a structured natural language description (SLD) of said environment and with said task and querying said large language model (LLM2) for identifying at least one said object instance, hereafter "task-relevant object instance", that is relevant for said robot (ROB) to complete said task;
- generating (F20), based on said general graph, a filtered graph by mapping thereon said at least one task-relevant object instance;
- determining a next command to be executed by the robot to complete the task, using at a least current state (*s_{robot}*) of the robot and the filtered general graph.

## Description

### BACKGROUND OF THE INVENTION

### 1. Field of the invention

The present disclosure relates to the field of robotics and more particularly to a method of controlling a robot to perform a task.

### 2. Description of Related Art

The present disclosure is more particularly in the control of robots to perform complex tasks, composed of numerous subtasks and requiring planning, memory, and adaptability.

Previous research conducted in single-room environments has demonstrated the ability to perform a wide range of tasks [1], [2]. However, in the context of mobile robotic kinematics, the scope of the environment can extend to entire apartments and outdoor spaces, including unexplored areas.

In such situations, it has been found that the number of possible objects and interactions increases exponentially, resulting in an explosion of planning times or hallucinations.

The present disclosure relates to a method of controlling a robot that aims to address such drawbacks.

### SUMMARY

According to aspects of the present disclosure, a computer-implemented method of controlling a robot is provided.

This method more particularly controls a robot to perform a kinematic task in response to a request expressed in natural language, the performance of the task requiring the robot to explore a real environment.

The kinematic task may comprise an exploration task and/or an object manipulation task.

In the present description, the object manipulation tasks may be any task involving interaction of the robot with respect to an object. In particular, the manipulation task may be any task related to grasping an object, moving around an object, finding an object, picking up and placing an object. Further, the manipulation tasks may comprise complex tasks such as opening a drawer, turning a handle, assembling pieces, cutting an object in pieces, or similar.

The method comprises:
- representing the environment by a general graph, comprising nodes and edges, in which:
   a/ each said node is associated with:
      (i) a position in the real environment, and if an instance of an object exists at this position,
      (ii) an identifier of that object instance;
   b/ creating an edge between two nodes if the robot can reach the position associated with one said node from the position associated with the other said node;
- providing a large language model with a structured natural language description of said environment and with said task and querying said large language model for identifying at least one said object instance, hereafter "task-relevant object instance", that is relevant for said robot to complete said task;
- generating, based on said general graph, a filtered graph by mapping thereon said at least one task-relevant object instance;
- determining a next command to be executed by the robot to complete the task, using at a least current state of the robot and the filtered general graph.

Thus, in general, the present disclosure proposes a method for controlling a robot in which the commands to be executed by the robot to perform the task are determined based on a graph filtered by a large language model, the filtering being performed in consideration of the task. For example, the general graph is a Voronoi graph.

This method greatly simplifies the complexity of robot planning and significantly reduces hallucinations and distractions.

In embodiments of the present disclosure, said real environment comprises a building and wherein said regions comprises at least one indoor room inside the building and at least one outdoor region outside the building.

The disclosed method thus focuses on generalizing rearrangement tasks with a mobile manipulator in a zero-shot manner, tackling both large-scale and unexplored environments spanning across indoor and outdoor spaces.

In embodiments, the computer-implemented method further comprises:
- partitioning the real environment into regions,
- classifying the regions according to the objects instances located in said regions;
- enriching said general graph by connecting at least one said node to a parent node that represents the class of the region corresponding to the position associated to said at least one node; wherein:
- said large language model is further queried said for identifying at least one said region, hereafter "task-relevant region", that is relevant for said robot to complete said task; and wherein:
- said filtered graph is generated by mapping said at least one task-relevant region on said general graph.

In this embodiment, filtering is not performed simply at the object level, but also at the region level. Filtering is considerably accelerated, particularly when a region comprising many objects proves to be irrelevant as a whole for solving the task.

In one embodiment, classifying said regions comprises querying a large language model for labelling each said region according to said objects located in said region.

In one embodiment, the step of determining the next command to be executed by the robot comprises querying a large language model with a natural description of said task, said filtered graph, the state of the robot, an action history and a list of available actions to achieve the task.

Thus, this disclosure proposes several uses of a large language model to control a robot:
i/ to classify different regions of the environment based on objects identified in those regions
ii/ to simplify the representation of the environment by temporarily removing objects and regions that are not relevant to the task assigned to the robot
iii/ to determine the next command to be executed by the robot.

The same large language model (or LLM) may or may not be used for each of these three operations.

In embodiments of the present disclosure, the method of controlling a robot comprises :
- creating a temporary edge between two said nodes whose associated positions belong to two adjacent regions,
- determining that said temporary edge crosses a potential movable barrier separating said regions;
- validating said temporary edge only if it is verified that the robot can operate the movable barrier to open a navigable between said two adjacent regions, otherwise deleting said temporary edge.

In embodiments of the present disclosure, as long as it is not certain that the robot can move from one region to another, these regions remain associated with disjoint graphs. This significantly reduces the complexity of planning.

In embodiments, the disclosed method comprises:
- representing said potential movable barrier by a Gaussian field;
- determining that said temporary edge crosses that potential movable barrier if at least some points of said temporary edge fall inside said field.

In embodiments of the present disclosure, the method of controlling a robot comprises a step of uniquifying each said object instance by assigning it an alphabetical identifier.

This feature makes it possible to distinguish objects of the same type and greatly reduce the risk of hallucinations. It should be noted that a definition of the term "hallucinations" shared by professionals refer to events in which AI models (especially large language models) generate outputs that seem coherent and linguistically correct but factually false or without sense. Hallucinations means generating false or misleading information.

Correlatively, the present disclosure concerns a robot comprising:
- a base configured to allow motion of the robot within an environment;
- an end-effector configured to interact with objects in the environment of the robot; and
- a control unit configured to control the robot to perform a task in response to a request expressed in natural language using the above mentioned method.

The present disclosure is further related to a computer program including instructions for executing the steps of the above method when said program is executed by a computer. This program can use any programming language and take the form of source code, object code or a code intermediate between source code and object code, such as a partially compiled form, or any other desirable form.

The present disclosure is further related to a recording medium readable by a computer and having recorded thereon a computer program including instructions for executing the steps of the above described method. The recording medium can be any entity or device capable of storing the program. For example, the medium can include a mass memory device, such as hard drive. In general, mass memory devices suitable for tangibly embodying computer program instructions and data include all forms of nonvolatile memory, including by way of example semiconductor memory devices, such as EPROM, EEPROM, and flash memory devices; magnetic disks such as internal hard disks and removable disks; and magneto-optical disks.

Alternatively, the recording medium can be an integrated circuit in which the program is incorporated, the circuit being adapted to execute the above methods or to be used in its execution.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
- FIG. 1 schematically represents a robot according to a particular mode of the present disclosure.
- FIG.2 schematically represents a control module of the robot of FIG. 1;
- FIG. 3 shows, in the form of a flowchart, the main steps of a control method in accordance with a particular mode of the present disclosure.
- FIG. 4 represents a typical environment in which the present disclosure applies and a corresponding Voronoi graph.
- FIG. 5 illustrates a filtering process in the sense of the present disclosure.

### DETAILED DESCRIPTION OF EMBODIMENTS

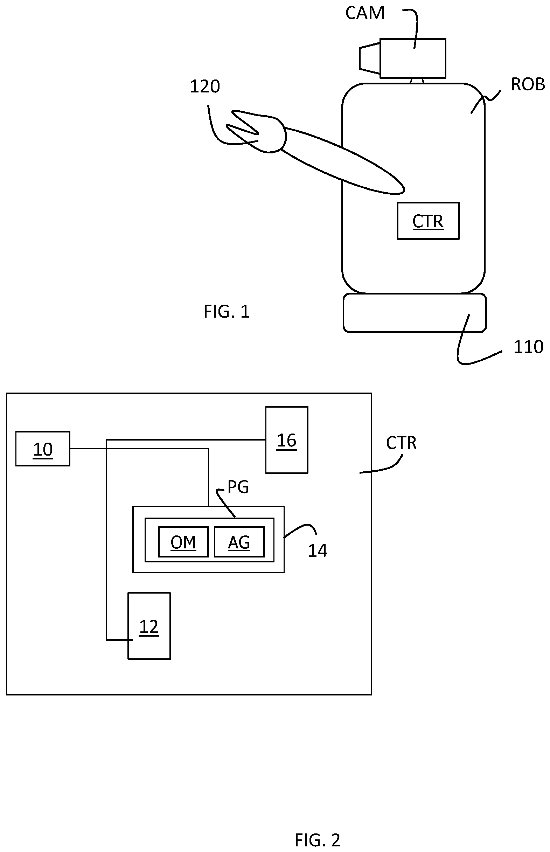

FIG 1 shows a robot ROB in accordance with a particular mode of the present disclosure.

This robot includes a base 110 configured to allow motion of the robot within an environment, an end-effector 120 configured to interact with objects in the environment of the robot gripping means, for example a gripper, and vision means for example a camera CAM.

The robot ROB also comprises a control module CTR, which is shown schematically in FIG 2.

The control module CTR has the hardware architecture of a computer. It comprises a processor 10, a random-access memory 12, a read-only memory 14 and communication means 16.

The read-only memory 14 constitutes a storage medium in accordance with the teaching of the present disclosure. It includes a computer program PG in accordance with the teaching of the present disclosure.

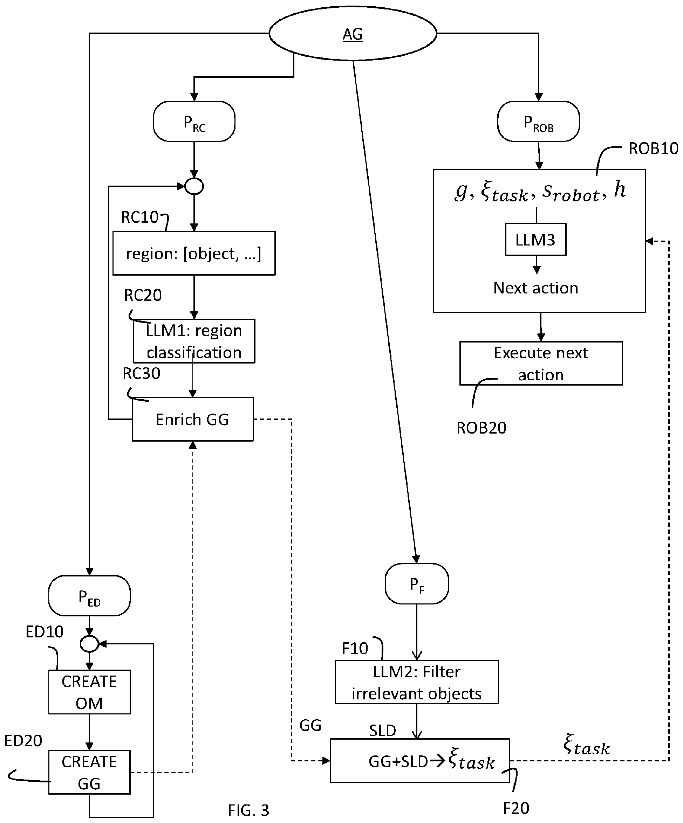

When the processor 12 executes the instructions of the computer program PG, it implements an agent AG configured to execute a method, the main steps of which are shown in FIG 3.

It also implements other software functions, for example to control the vision means CAM, the base 110 and the end-effector 120, which are not described here. In figure 3 these functions are grouped here in a generic module OM ("other module").

To illustrate the description, let us suppose that the task *g* assigned to the robot ROB is to "distribute daffodils in different pots and cactus in a pot".

In one embodiment of this divulgation, the agent AG is configured to implement an environment discovery process PED.

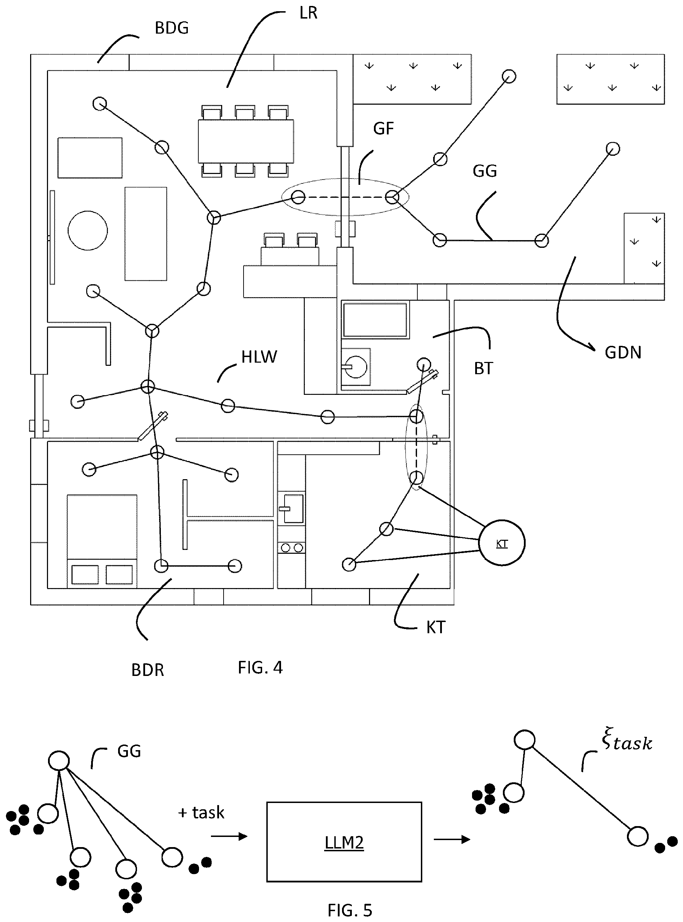

In one embodiment of the present invention, the PED environment discovery process includes a step ED10 of constructing an occupancy map and a step ED20 of constructing a Voronoi graph, hereinafter referred to as a "general graph" GG shown in FIG 4.

This disclosure does not presume how the robot ROB becomes aware of objects in the environment.

For example, as the robot ROB progresses in the environment ENV; the robot can discover objects by itself using the vision system CAM or obtain information about these objects, including their position and type, from another module or device, using the communication means 16.

To simplify, the expression "the robot discovers something" used hereafter indicates that the robot obtains knowledge about this thing, regardless of how it obtains it.

In one embodiment, the agent AG identifies each instance of a given object type by assigning it an alphabetic identifier. For example, if the robot discovers several chairs, it identifies them as "chairl", "chair2", "chair3"...

As it discovers walls, door, partitions that separate the different rooms, the agent AG divides the environment into regions. For example, each region is temporary labelled by an identifier obtained by concatenation of the keyword "region" followed by a unique number (region0, region1, ...).

The occupancy map is a map with bird's-view that shows obstacles (walls, furniture), navigable areas where the robot ROT can pass and unknown areas not yet explored.

In the example of FIG. 4, the environment is partitioned into 6 regions, namely 5 regions "region1" ... "region5" corresponding to the 5 interior rooms (living room LR, kitchen KT, dining room DR, bathroom BTH, bedroom BDR and hallway HLW) and one region "region6" corresponding to the garden GDN.

As the robot ROB builds the occupancy map, the robot builds the general graph GG. In this example, the general graph GG is a navigation graph of the Voronoi type, which:
- follows the corridors in the middle of the free spaces, staying away from the walls,
- connects important places such as known objects seen or doors,
- allows the robot to choose intelligently where to go to avoid obstacles.

The general graph GG is therefore a representation of the knowledge that the robot ROB has of the environment ENV at a given moment.

The general graph GG comprises nodes and edges, in which:
a/ each said node is associated with:
   (i) a position in the real environment, and if an instance of an object exists at this position,
   (ii) an identifier of that object instance;
b/ an edge is created between two nodes if the robot can reach the position associated with one said node from the position associated with the other said node.

Initially, as long as the agent AG does not identify an unambiguous passage between two regions, in other words as long as the agent AG is not certain that the robot ROB can actually pass from one region to another, it creates separate general graphs for these regions.

In one embodiment, when agent AG identifies a potential passage between two nodes associated with positions belonging to two adjacent regions, it creates a temporary edge between these nodes. (represented here by a dashed line).

This is the case, for example, when the agent discovers two nodes on either side of a movable barrier (door, gate, window, hatch, etc.) that the robot may not be able to open and pass through.

In one embodiment, a movable barrier is represented on the general graph GG by a Gaussian field GF and the agent identifies that a temporary edge crosses that potential movable barrier if at least some points of said temporary edge fall inside said field.

In this described embodiment, the agent AG executes a computer vision method to identify movable barriers. In another embodiment, to facilitate the recognition of movable barriers, these are marked with a QR code readable by the robot.

In this embodiment, when the agent AG is certain that the robot can indeed open the movable barrier and identify a navigable passage between the two adjacent regions, the agent validates the temporary edge as a definitive edge so as to merge the Voronoi general graphs of these regions.

On the other hand, if the agent determines that the robot is unable to cross the mobile barrier, it removes the temporary border.

For example, the environment is divided into regions when no navigable path exists between navigable regions, most commonly due to closed doors or gates. To extract the Voronoi graph for each region separately, the agent AG first removes all edges whose nodes belong to different regions. To achieve this, all observed doors are treated as separation gates and all edges that cross doors at removed. In one embodiment, the agent AG constructs a 2D Plane and fits a Gaussian kernel to each door, where the center of the kernel aligns with the center of the door. The Gaussian kernel diameters are adjusted according to the door's bounding box dimensions. Each door and its associated Gaussian kernel also share the same orientation.

Next, the agent AG evaluates each edge by integrating the values of its points in the 2D plane. If this integral exceeds a threshold, it indicates that the edge passes through a Gaussian kernel, that is, a door, implying that its nodes belong to different regions. As a result, when these edges are removed, it ensures a clear segmentation of the scene.
In one embodiment of this divulgation, the agent AG is configured to implement a region classification process P_{RC}.

For example, the region classification process P_{RC} is performed by a large language model LLM1 using a prompt-based, open-vocabulary approach.

For example, in a step RC10, each region is identified (region0, region1, ...) and for each region, the system provides a list of object instance observed in the region.

For example,
*region-0 contains [armchair A, armchair B, bush A, bush B, bush C, coffee-table B, closed dishwasher A, grill A, closed microwave A, pedestal-table A, picture A, pillar A, pillar B, plant-pot A, plant-pot B, plant-pot C, plate A, pot-plant D, pot-plant E, pot-plant F, pot-plant G, pot-plant H, pot-plant I, pot-plant J, pottable-daffodil A, pottable-daffodil B, sofa B, sofa C, spotlight A, tree X, tree Y, tree Z, tree AA, tree AB, closed window A, closed window D].*
*region-1 contains [background A, bed A, closed bottom-cabinet A, closed bottom-cabinet D, closed bottom-cabinet B, closed bottom-cabinet C, closed bottom-cabinet E, closed bottom-cabinet F, breakfast-table A, breakfast-table B, coffee-table A, countertop A, electric-switch B, electric-switch C, , floor-lamp A, closed fridge A, lawn A, loudspeaker A, ottoman A, closed oven A, picture B, picture C, pot-plant A, pot-plant B, pot-plant C, roof A, shelf A, shelf B, sink B, sofa A, standing-tv A, straight-chair A, straight-chair B, swivel-chair A, table-lamp A, closed top-cabinet G, closed top-cabinet H, trash-can A, closed window B, closed window C].*
*region-2 contains [mirror A, pottable-cactus A, shower-stall A, sink A, toilet A, towel-rack A, towel-rack B].*

At step RC20, the large language model LLM1 is given a natural language formatted prompt to guide the LLM toward classifying each region based on typical region-object associations.

For example:
*"You have already observed 3 regions, they contain the following objects:*
[... *list of objects per regions ...]*
*Please classify the regions. If you are unsure, classify them as other region.*
*Output Response Format:*
   - *region-X: region type"*

In response to the prompt the large language model LLM1 answers a structured language description SLD of the environment ENV.

The classification is open-set, meaning that LLM1 is not restricted to a fixed list of regions types. It uses its training knowledge to infer that:
- a room with a bed and nightstands is likely a bedroom,
- a room with armchairs and a carpet might be a living room,
- and so on.

For example, after classifying of the regions, the structured language description SLD is as follows:
*garden:[armchair A, armchair B, bush A, bush B, bush C, coffee-table B, closed dishwasher A, grill A, closed microwave A, pedestal-table A, picture A, pillar A, pillar B, plant-pot A, plant-pot B, plant-pot C, plate A, pot-plant D, pot-plant E, pot-plant F, pot-plant G, pot-plant H, pot-plant I, pot-plant J, pottable-daffodil A, pottable-daffodil B, sofa B, sofa C, spotlight A, tree X, tree Y, tree Z, tree AA, tree AB, closed window A, closed window D].*
*kitchen: [background A, bed A, closed bottom-cabinet A, closed bottom-cabinet D, closed bottom-cabinet B, closed bottom-cabinet C, closed bottom-cabinet E, closed bottom-cabinet F, breakfast-table A, breakfast-table B, coffee-table A, countertop A, electric-switch B, electric-switch C, , floor-lamp A, closed fridge A, lawn A, loudspeaker A, ottoman A, closed oven A, picture B, picture C, pot-plant A, pot-plant B, pot-plant C, roof A, shelf A, shelf B, sink B, sofa A, standing-tv A, straight-chair A, straight-chair B, swivel-chair A, table-lamp A, closed top-cabinet G, closed top-cabinet H, trash-can A, closed window B, closed window C].*
*bathroom: [mirror A, pottable-cactus A, shower-stall A, sink A, toilet A, towel-rack A, towel-rack B].*

Region classification is re-evaluated dynamically: as the robot ROB explores and new objects are discovered, the region contents evolve, and the large language model LLM1 may update its classification accordingly.

In one embodiment of this divulgation, at step RC30, and as shown in Figure 5, the Voronoi general graph GG is enriched by connecting each node associated with an object instance to a parent node that represents the class of the region in which this object instance is located.

To avoid overloading Figure 4, this is only shown for the kitchen KT.

In one embodiment of this divulgation, the agent AG is configured to implement a filtering process P_{F}.

In one embodiment, the filtering process P_{F} comprises a step F10 of passing the task *g* and the structured language description SLD of the scene to a large language model LLM2 in order to filter relevant objects, and preferably relevant regions for the robot to complete the task.

For example:
*agent: You have already observed 3 regions, they contain the following objects: garden:[armchair A, armchair B, bush A, bush B, bush C, coffee-table B, closed dishwasher A, grill A, closed microwave A, pedestal-table A, picture A, pillar A, pillar B, plant-pot A, plant-pot B, plant-pot C, plate A, pot-plant D, pot-plant E, pot-plant F, pot-plant G, pot-plant H, pot-plant I, pot-plant J, pottable-daffodil A, pottable-daffodil B, sofa B, sofa C, spotlight A, tree X, tree Y, tree Z, tree AA, tree AB, closed window A, closed window D].*
*kitchen: [background A, bed A, closed bottom-cabinet A, closed bottom-cabinet D, closed bottom cabinet B, closed bottom-cabinet C, closed bottom-cabinet E, closed bottom-cabinet F, breakfast-table A, breakfast-table B, coffee-table A, countertop A, electric-switch B, electric-switch C, , floor-lamp A, closed fridge A, lawn A, loudspeaker A, ottoman A, closed oven A, picture B, picture C, pot-plant A, pot-plant B, pot-plant C, roof A, shelf A, shelf B, sink B, sofa A, standing-tv A, straight-chair A, straight-chair B, swivel-chair A, table-lamp A, closed top-cabinet G, closed top-cabinet H, trash-can A, closed window B, closed window C].*
*bathroom: [mirror A, pottable-cactus A, shower-stall A, sink A, toilet A, towel-rack A, towel-rack B].*
*Your task is to distribute daffodils in different pots and cactus in a pot.*
*Please remove any objects or regions that you are sure will be irrelevant for a robot to complete the task or to find any objects relevant to the task. Output Response Format: A list with bullet points of the form - region name: [object 1, object 2, ...]*
*Remember: - you can only use the given regions and objects. - note that some objects are not explicitly mentioned in the task description, but will be helpful to solve the task. - don't remove any objects that might be helpful in finding objects needed for the task. - your action space includes open, close, grasp, place. - respond only in the described output format.*

The large language model LLM2 outputs structured language representation SLD.

For example:
*garden: [plant-pot A, plant-pot B, plant-pot C, pottable-daffodil A, pottable-daffodil B]*
*kitchen: []*
*bathroom: [pottable-cactus A]*
In one embodiment, the filtering process P_{F} comprises a step F20 of converting back the output structured language description SLD into a filtered graph *ξₜₐₛₖ* containing only relevant scene information for the task g.

In this example, the filtered graph is obtained by mapping on the general graph GG the structured language description SLD output by the large language model LLM2. More precisely, this step results in :
- copying the general graph
- removing from this copy the parent node associated with the *"kitchen"* region and all its child nodes;
- deleting identifiers of objects instances that are not within the list of task-relevant object instances.

FIG 5 illustrates this filtering step using an example, assuming a general graph comprising 4 nodes associated with 5, 3, 4, and 2 objects, respectively. The structured language description is provided to the LLM along with a structured language description of the task. The LLM outputs a structured description of the environment filtered according to the task, which can be converted into a filtered graph to facilitate the determination of the next command to be executed.

In one embodiment of this divulgation, the agent AG is configured to implement a robot control process P_{ROB}.

The main purpose of the robot control process P_{ROB} is to determine the next command to be executed by the robot to complete the task g.

In one embodiment, the robot control process P_{ROB} comprises a step ROB10 of querying a large language model LLM3 with the task g, the filtered graph *ξₜₐₛₖ*, the state *s_{robot}* of the robot, an action history *h* and a list of available actions to achieve the task.

In one embodiment, the robot state *s_{robot}* comprises the region it is currently in and whether it is holding an object in its end-effector 120.

The large language model LLM3 responds with the next command to be executed by the robot ROB.

For example:
*You are a robot with a manipulator arm in an unexplored environment.*
*Your task is to distribute daffodils in different pots and cactus in a pot.*
*You are currently in the bathroom. You are standing next to the following objects: [pottable-cactus A].*
*Furthermore, you have found the following rooms and objects in the house so far:*
*garden: [plant-pot A, plant-pot B, plant-pot C, pottable-daffodil A, pottable-daffodil B]*
*kitchen: []*
*bathroom: [pottable-cactus A]*
*These rooms have unexplored space leading out of the room:* [].
*These rooms have unexplored space within the room: [].*
*Your 5 previous actions were: go_to_and_place_inside(garden, plant-pot B) - Succeeded., explore(kitchen) -*
*Succeeded., go_to_and_open(garden, opened door A) - Succeeded., explore(bathroom) -*
*Succeeded., explore(bathroom) - Succeeded.*
*Your arm is empty and you are allowed to grasp an object*
*You have the following actions available that you can use to achieve this task:*
   *1. navigate(region_name, object_name): navigate to this object in this region.*
   *2. go_to_and_open(region_name, object_name): go to this articulated object, door or container and open it.*
   *3. go_to_and_close(region_name, object_name): go to this articulated object, door or container and close it.*
   *4. go_to_and_grasp(region_name, object name): go to this object in this region and grasp it.*
   *5. go_to_and_place_inside(region_name, object name): go to this object in this region and place the grasped object inside of it.*
   *6. go_to_and_place_ontop(region_name, object name): go to this object in this region and place the grasped object on top of it.*
   *7. explore(region_name): explore the unknown space near one of the regions that is not fully explored yet.*
   *8. done(): call when the task is completed or if you are unable to take any further actions.*
You must respond with three items, Analysis, Reasoning, and Command, as below: Analysis: describe where you could find the objects of interest and what actions you need to execute to get there.
Reasoning: justify why the next action is important to solve the task.
Command: function call

During a step ROB20, the agent AG controls the robot to execute the next action provided by the large language model LLM3. The actual control of the robot, to guide it, avoid obstacles, open doors, and grasp objects, is not part of this disclosure.

### EXAMPLE OF IMPLEMENTATION DETAILS

The method was tested on the BEHAVIOR-1K benchmark [3], specifically on a set of 81 tasks, whose natural language descriptions were refined. GPT-4o was used as the language model. The simpler model GPT-3.5 Turbo was used for room classifications

Although the present disclosure refers to specific exemplary embodiments, modifications may be provided to these examples without departing from the general scope of the invention as defined by the claims. In particular, individual characteristics of the different illustrated/mentioned embodiments may be combined in additional embodiments. Therefore, the description and the drawings should be considered in an illustrative rather than in a restrictive sense.

### References:

[1]: M/ Shridhar, J. Thomason, D. Gordon er al. "Alfred: A benchmark for interpreting grounded instructions for everyday tasks" in Proc. ff the IEEE Conf. on Comp. Vision and Pattern recognition, 2020, pp. 10740-10749.
[2]: S.Nasiriany, A.Maddukuri, L. Zhang, A. Parikh et al/, "RoboCasa: Large-Scale Simulation of Household Tasks for Generalist Robots" in Robotics: Science and Systems, Delft, Netherlands, July 2024.
[3]: C.Li, R. Zhang, J. Wong, C. Gokmen et al.; "Behavior-1k: A benchmark for embodied ai with 1,000 everyday activities and realistic simulation, in Proc. Of the Conf. on Rob. Learning. PMLR, 2023, pp. 80-93.

## Claims

1. A computer-implemented method (CM) of controlling a robot (ROB) to perform a kinematic task (*g)* in response to a request expressed in natural language, the performance of the task (*g*) requiring the robot to explore a real environment (ENV), the method comprising:
- representing (ED20) said environment by a general graph (GG), comprising nodes and edges, in which:
a/ each said node is associated with:
(i) a position in the real environment, and if an instance of an object exists at this position,
(ii) an identifier of that object instance;
b/ creating an edge between two said nodes if the robot (ROB) can reach the position associated with one said node from the position associated with the other said node;
- providing (F10) a large language model (LLM2) with a structured natural language description (SLD) of said environment (ENV) and with said task (*g*) and querying said large language model (LLM2) for identifying at least one said object instance, hereafter "task-relevant object instance", that is relevant for said robot (ROB) to complete said task (*g*);
- generating (F20), based on said general graph (GG), a filtered graph (*ξₜₐₛₖ*) by mapping thereon said at least one task-relevant object instance;
- determining a next command to be executed by the robot to complete the task (*g*), using at a least current state (*s_{robot}*) of the robot and the filtered general graph (*ξₜₐₛₖ*).

2. A computer-implemented method (CM) according to Claim 1 further comprising:
- partitioning said real environment into regions,
- classifying (RC10) said regions according to said objects instances located in said regions;
- enriching (RC20) said general graph (GG) by connecting at least one said node to a parent node that represents the class of the region corresponding to the position associated to said at least one node; wherein:
- said large language model (LLM2) is further queried (F10) said for identifying at least one said region, hereafter "task-relevant region", that is relevant for said robot (ROB) to complete said task (*g*); and wherein:
- said filtered graph (*ξₜₐₛₖ*) is generated (F20) by mapping said at least one task-relevant region on said general graph (GG).

3. A method of controlling a robot according to Claim 1 or 2, wherein classifying said regions (RC20) comprises querying a large language model (LLM1) for labelling each said region according to said objects located in said region.

4. A method of controlling a robot according to any one of Claims 1 to 3, wherein the step of determining said next command to be executed by the robot comprises querying a large language model (LLM3) with a natural description of said task (*g*), said filtered graph (*ξₜₐₛₖ*), the state (*s_{robot}*) of the robot, an action history (*h*) and a list of available actions to achieve the task (*g*).

5. A method of controlling a robot according to any one of Claims 1 to 4, comprising:
- creating a temporary edge between two said nodes whose associated positions belong to two adjacent regions,
- determining that said temporary edge crosses a potential movable barrier separating said regions;
- validating said temporary edge only if it is verified that the robot can operate the movable barrier to open a navigable between said two adjacent regions, otherwise deleting said temporary edge.

6. A method of controlling a robot according to Claim 5, comprising:
- representing said potential movable barrier by a Gaussian field;
- determining that said temporary edge crosses that potential movable barrier if at least some points of said temporary edge fall inside said field.

7. A method of controlling a robot according to any one of Claims 1 to 6, wherein said real environment (ENV) comprises a building (BDG) and wherein said regions (REG) comprises at least one indoor room inside the building and at least one outdoor region outside the building.

8. A method of controlling a robot according to any one of Claims 1 to 7, comprising a step of uniquifying each said object instance by assigning it an alphabetical identifier.

9. A method of controlling a robot according to any one of Claims 1 to 8, wherein said general graph is a Voronoi graph.

10. A robot (ROB) comprising:
- a base (110) configured to allow motion of the robot within an environment;
- an end-effector (120) configured to interact with objects in the environment of the robot; and
- a control unit (130) configured to control the robot (ROB) to perform a kinematic task (g) in response to a request expressed in natural language using the method according to any of claims 1 to 9.

11. A computer program set including instructions for executing the steps of the method of any one of claims 1 to 9 when said program set is executed by at least one computer.

12. A recording medium readable by at least one computer and having recorded thereon at least one computer program including instructions for executing the steps of the method of any one of claims 1 to 9.
